# EUROPEAN PATENT SPECIFICATION

(11) **EP 1 443 475 B1**
(45) Date of publication and mention of the grant of the patent: **09.03.2005**
(21) Application number: 01978466.9
(22) Date of filing: 26.10.2001
(51) Int. Cl.: G07F 7/08

(54) **UNIVERSAL PAYMENT ACTIVATOR USING THE MOBILE TELEPHONE NETWORK**
UNIVERSELLER BEZAHLUNGSAKTIVIERER, DER DAS MOBILTELEFONNETZ VERWENDET
ACTIVATEUR UNIVERSEL DE PAIEMENTS VIA LE RESEAU DE TELEPHONIE MOBILE

(43) Date of publication of application: 04.08.2004
(73) Proprietor: Servicios para Medios de Pago, S.A., 28002 Madrid (ES)
(72) Inventor: NUNEZ BENITO, Ana, E-28002 Madrid (ES); GALLEGO GONZALEZ, Jose, Antonio, E-28002 Madrid (ES)
(74) Representative: PROPI, S.L.
(86) International application number: PCT/ES2001/000406
(87) International publication number: WO 2003/036575

(56) References cited:
- WO-A1-01/43092
- WO-A1-01/52205
- WO-A1-97/39565
- FR-A- 2 795 897
- US-A1- 2001 034 707

## Description

### OBJECT OF THE INVENTION

The present invention refers to a universal payment activator system using mobile phones, both in bricks-and-mortar retail businesses, such as, for example, any public sales establishment, as well as through Internet.

The object of the invention is to automatically permit any commercial transaction of the aforementioned types, i.e. without the user needing to verbally provide the establishment with his mobile phone number, without said establishment having to key the said number or it being necessary to substitute or modify the current terminals used in these types of public establishments, all of this maintaining full security guarantees for the system user's.

### BACKGROUND OF THE INVENTION

The problems with classic paycards are very well known, especially in non-bricks-and-mortar transactions, given that the loss of the card or third parties having knowledge of its identification details, permits it to be easily used fraudulently.

With the aim of avoiding this problem, payment activation through mobile phones is known, and there are several technological solutions that basically have the following characteristics as common denominator:
- The mobile phone holder comes to an agreement with one or several finance companies that provide him with one or several paycards, to which he can subsequently charge his purchases.
- The retail businesses that wish to incorporate this new operative method should update their terminals to permit the transmission of the telephone number to the processing centre, instead of the classic bankcard. In some cases, new terminals are needed.
- The processing centre contacts the holder by means of the mobile phone, who, by means of a secret number, provides a particular card to carry out the current transaction.
- The processing centre handles the transaction as an authorisation request with a card in a traditional manner.
- The authorisation is processed by the traditional circuits of payments to the retail businesses and charged to the holder.

The implementation of these types of solutions through the mobile phone have some problems that are difficult to resolve, which are:
- As has already been stated, in some cases it is necessary to change or update the terminals of the retail businesses with the associated cost that this implies.
- It is very difficult to implement this solution in retail businesses outside the performance area of the processing company, as it obliges interoperability or transport agreements, with changes in the established dialogue protocols.
- In the case of retail businesses located abroad, very frequent in Internet sales, where this payment operative method using the mobile phone could have special relevance, the difficulty in obtaining interoperability agreements is even greater as it is dependent on international payment networks.
- The system obliges the user to say his mobile phone number in a public establishment which might generate problems to certain people, as revealing it in the presence of third parties might give rise to some annoying or unwanted calls from said third parties.
An example of these types of solutions is shown in the international publication number WO-A-0 152 205, in which a method and apparatus for generating a telephone call from an authentication server to a credit card user to validate a transaction is described. The server retrieves a telephone number and Personal Identification Number (PIN), supplied in the moment of the application to the credit card company for approval of the service, when a transaction request is received, and when the user enters the correct PIN generates an authentication code based on the transaction and the PIN to validate the transaction.

### DESCRIPTION OF THE INVENTION

The activator that the invention proposes, resolves, in a completely satisfactorily manner, the aforementioned problem, and for this, centres its characteristics on the substitution of the classic bank paycard for another of identical appearance, in which the classic 16 digits become the following:
- Digits 1 to 6 consisting of the specific BIN (*Bank Identification Number*) of the processing company whose technological platform the mobile phone holder is going to use or another that he delegates. This BIN should evidently be a valid one and admitted worldwide, associated with the payment processor.
- Digits 7 to 15 correspond to the user's mobile phone number, without international prefixes.
- Digit 16 consists of the control digit for the 15 previous ones, as is normally done with classic bank paycards.

A series of advantages derive from the use of the activator of the invention that are fundamentally centred on the following aspects:
- Any retail business that habitually works with the make of paycards that the BIN used belongs to, is capable of using this operation without changes, as the procedure, both for the client and for the retailer, is performed exactly the same as with a normal paycard.
- Once the processing centre receives the authorisation request, it proceeds to perform the normal payment operation using a mobile phone, extracting for this, the number of its digits or positions 7 to 15 of the new card used.
- It is not necessary to modify the current protocols of the intervening payment networks, for which reason, the solution is quick to implement.
- The only associated cost is the production of a plastic card with numeration for this purpose.
- It permits interoperability between different payment processors and technological platforms of payment by mobile phone, even on an international level.
- It permits making all the national and international transactions made through Internet secure.
- The loss or theft of the new card does not involve any risks, as the mobile phone holder should in all cases authorise its use by means of introducing a secret number, with which he has to identify himself when he receives a call from the processing centre to authorise the payment.

### DESCRIPTION OF THE DRAWINGS

To complement the description being made and for the object of helping towards a better understanding of the characteristics of the invention, in accordance with a preferred example of practical embodiment thereof, a set of drawings is attached, being an integral part of said description, wherein the following is represented with an illustrative, non-limiting character:
Figure 1 shows a schematic representation of the universal payment activator card through the mobile phone network which constitutes the object of this invention.
Figure 2 shows an operative diagram of a commercial operation making use of the card from the previous figure.
Figure 3 shows a similar diagram to figure 2 but corresponding to a supposed practical example in which there are several card processing centres and each processing centre is associated with several issuers.

### PREFERRED EMBODIMENT OF THE INVENTION

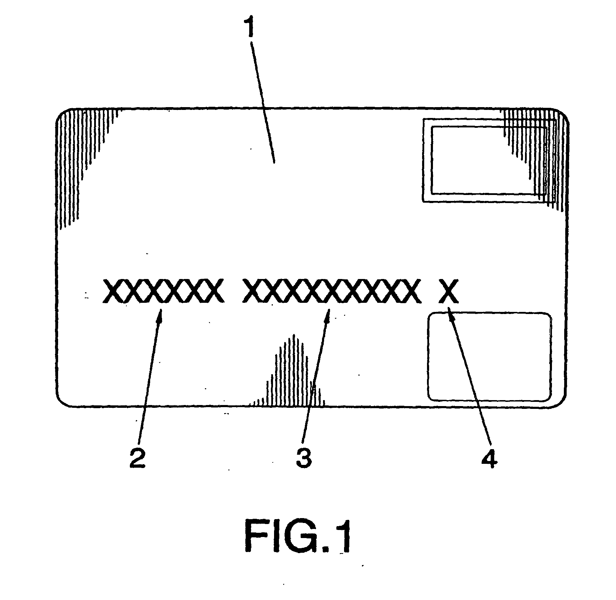

In figure 1 it can be observed that the universal payment activator of the invention proposed is materialised in a card (1) with 16 digit numeration, as in any conventional paycard, the first 6 (2) corresponding to the specific BIN of the processing company, the following 9 (3) to the user's mobile phone number, and the last (4) to the control digit for all the previous ones, in a similar manner as with the control digit in classic bank paycards.

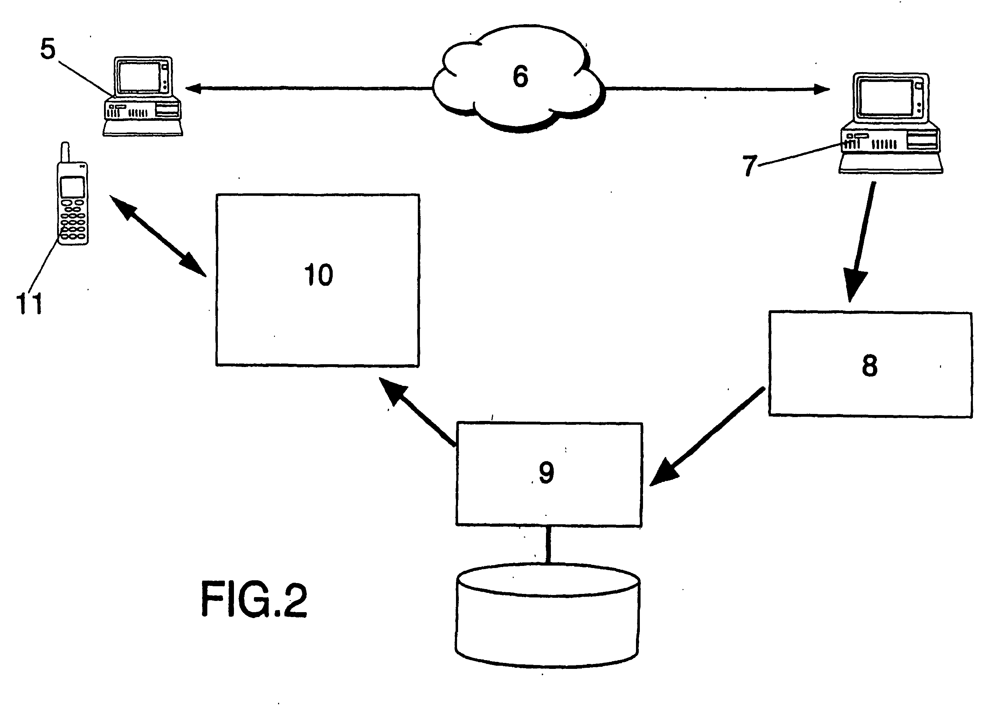

With the card structured in this manner, and as is observed in figure 2, through Internet (6), a holder (5) situated in any country, may purchase in any retailer's (7), of the same or different country, which will supply the data received from the card's (1) digits (2), (3), (4) to the purchasing company (8), which, through any communication channel (9) will supply it, in turn, to the issuing company or processing centre (10), which, in turn, will authenticate it with the card holder himself through the mobile phone (11) of the latter, whose number corresponds to the group of digits (3) of said card.

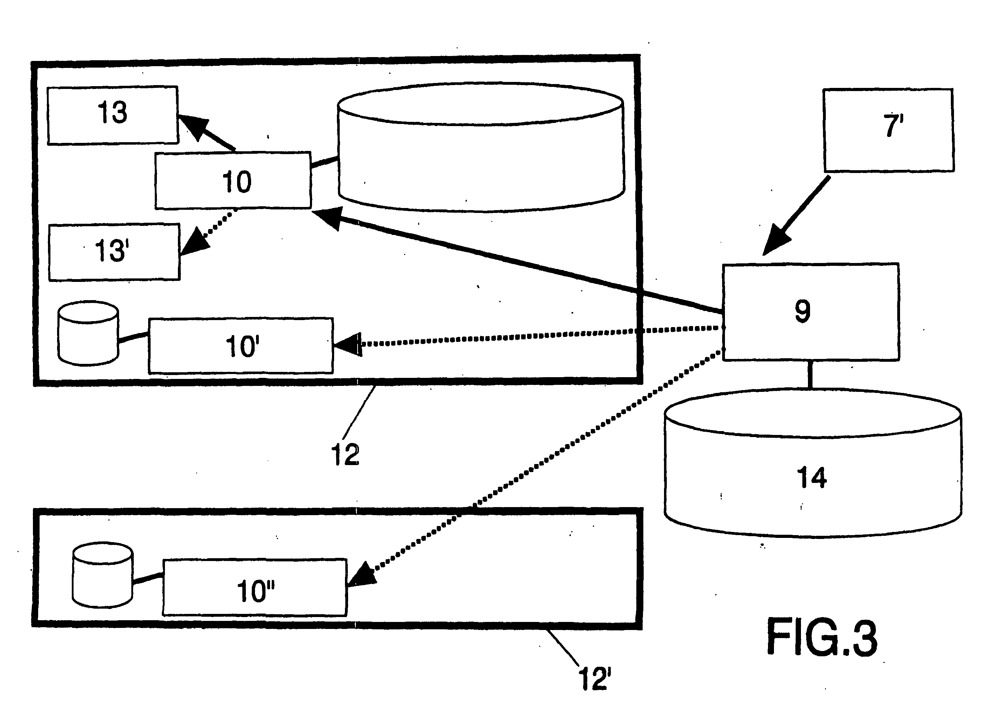

As is shown in figure 3, there is the possibility that several processing centres (10), (10'), (10") participate, situated in the same country or different countries (12), (12'), and to each processing centre (10) one or several issuers (13), (13') can be associated, the retail businesses (7') being able to be located in any of the aforementioned countries (12), (12') or in a different one, but should have in any case, the communication channel (9) for the data (14) corresponding to the BIN of the different processing centres (10) of the stated countries.

In this manner, complete universality of the activator is achieved with full security guarantees for the users in all circumstances.

## Claims

1. Universal payment activator through the mobile phone network, of the type where a holder of a mobile phone comes to an agreement with at least one finance or bank company which provides him with at least one paycard to which he can charge his purchases and where at least one processing centre handles the retail transaction contacting by telephone the holder of the mobile phone that has been used for the transaction for its validation by means of a request to the user for a secret code; the activator being materialised in a card (1), similar to a conventional paycard, with the classic 16 digits, the 6 first (2) corresponding to the specific BIN of the processing company whose technological platform the mobile phone holder is going to use, and the final digit (4) consisting of a control digit for the fifteen previous ones, **characterized in that**, the nine digits (3) following the 6 first (2), correspond to the user's mobile phone number, in such a manner that the user's telephone numbers automatically accesses, if appropriate, the retail terminal.

2. Universal payment activator through the mobile phone network, according to claim 1, **characterized in that** the said card, using the already existing communication means or channels (9) may be associated with different processing centres (10), (10'), (10") independent from one another.

3. Universal payment activator through the mobile phone network, according to previous claims, **characterized in that** each processing centre (10) can be associated with several issuers (13), in turn, independent from one another.

4. Universal payment activator through the mobile phone network, according to previous claims, **characterized in that** several paycards of the same holder can be associated with the same activator card, and can be used selectively by the latter.

## Patentansprüche

1. Universelles Zahlungsaktivator über das Mobiltelefonnetz der Art, bei welcher ein Inhaber eines Mobiltelefons eine Vereinbarung mit mindestens einer Finanzierungs- oder Bankgesellschaft trifft, die ihm mindestens eine Zahlungskarte bereitstellt, an die er seine Einkäufe anrechnen lassen kann, bei welcher mindestens ein Bearbeitungszentrum sich mit der Verkaufstransaktion befasst, indem Kontakt mit dem Inhaber des für die Transaktion benutzten Mobiltelefons, für deren Bestätigung durch das Erbitten eines Geheimcodes an dem Kunde, aufgenommen wird; wobei der Aktivator sich in einer Karte (1), welche einer konventionellen Zahlungskarte ähnlich ist, mit den klassischen 16 Ziffern verwirklicht, wobei die ersten 6 Ziffern (2) der spezifischen BIN (Bank Identification Number, Bankleitzahl) der Bearbeitungsfirma, deren technologische Plattform der Mobiltelefoninhaber verwendet, entspricht, und wobei die letzte Ziffer (4) aus einer Kontrollziffer für die fünfzehn Vorhergehenden besteht, **dadurch gekennzeichnet, dass** die den 6 ersten Ziffern (2) folgenden neun Ziffern (3) der Mobiltelefonnummer des Benutzers entsprechen, so dass die Telefonnummern des Benutzers falls zutreffend automatisch auf das Verkaufsterminal zugreifen.

2. Universelles Zahlungsaktivator über das Mobiltelefonnetz nach Anspruch 1, **dadurch gekennzeichnet, dass** die besagte die schon vorhandenen Kommunikationsmittel oder - kanäle (9) anwendende Karte verschiedenen untereinander unabhängigen Bearbeitungszentren (10), (10'), (10") zugeordnet werden kann.

3. Universelles Zahlungsaktivator über das Mobiltelefonnetz nach den vorhergehenden Ansprüchen, **dadurch gekennzeichnet, dass** jedes Bearbeitungszentrum (10) mehreren jeweils untereinander unabhängigen Emittenten (13) zugeordnet werden kann.

4. Universelles Zahlungsaktivator über das Mobiltelefonnetz nach den vorhergehenden Ansprüchen, **dadurch gekennzeichnet, dass** mehrere Zahlungskarten des gleichen Inhabers der gleichen Aktivierungskarte zugeordnet werden und selektiv durch diese angewendet werden können.

## Revendications

1. Activateur de paiement universel à travers le réseau de téléphones mobiles, du type dans lequel un abonné d'un téléphone mobile arrive à un accord avec au moins une compagnie financière ou bancaire qui lui fournira au moins une carte de paiement sur laquelle il pourra charger ses achats, et dans lequel au moins un centre de traitement s'occupe de la transaction de vente en contactant par téléphone l'abonne du téléphone mobile qui a été utilisé pour la transaction pour sa validation au moyen d'une demande à l'utilisateur d'un code secret; l'activateur étant matérialisé dans une carte (1), similaire à une carte de paiement conventionnelle, avec les 16 chiffres classiques, les 6 premiers chiffres (2) correspondant au BIN (Bank Identification Number) spécifique de l'entreprise de traitement dont la plate-forme technologique va être utilisée par l'abonné du téléphone mobile, le dernier chiffre (4) consistant en un chiffre de contrôle pour les quinze antérieurs, **caractérisé en ce que** les neuf chiffres (3) qui suivent les 6 premiers (2) correspondent au numéro de téléphone mobile de l'utilisateur de telle manière que le numéro de téléphone de l'utilisateur accède automatiquement, le cas échéant, au terminal de vente.

2. Activateur de paiement universel à travers le réseau de téléphones mobiles selon la revendication 1, **caractérisé en ce que** ladite carte, qui utilise des moyens ou des canaux (9) de communication préexistants, peut être associée à des centres (10), (10'), (10") de traitement différents, indépendants entre eux.

3. Activateur de paiement universel à travers le réseau de téléphones mobiles selon les revendications antérieures, **caractérisé en ce que** chaque centre (10) de traitement peut être à son tour associé avec divers émetteurs (13) indépendants entre eux.

4. Activateur de paiement universel à travers le réseau de téléphones mobiles selon les revendications antérieures, **caractérisé en ce que** diverses cartes de paiement du même abonné peuvent être associées à la même carte activatrice et elles peuvent être utilisées sélectivement par celle-ci.
